# EUROPÄISCHE PATENTANMELDUNG

(11) **EP 3 366 124 A1**
(43) Veröffentlichungstag der Anmeldung: **29.08.2018**
(21) Anmeldenummer: 18157776.8
(22) Anmeldetag: 21.02.2018
(51) Int. Cl.: A01K 63/04, C02F 1/28, C02F 1/66, C02F 9/00

(54) **STABILISATIONSANLAGE DES PH-WERTES VON WASSER DER AMMONIUMSTICKSTOFF-ENTFERNUNGSEINHEIT AUS DEM WASCHWASSER VON ZEOLITH-FILTERN**

(30) Priorität: 22.02.2017 RU 2017105870
(71) Anmelder: Kitashin, Jurii, 140003 Lubertsy (RU); Dubrovin, Evgeny, 123056 Moskau (RU); Yakushev, Dmitry, 125222 Moskau (RU); Kitashin, Oleg, 140003 Lubertsy (RU); Dubrovin, Dmitry, 121614 Moskau (RU)
(72) Erfinder: Kitashin, Jurii, 140003 Lubertsy (RU); Dubrovin, Evgeny, 123056 Moskau (RU); Yakushev, Dmitry, 125222 Moskau (RU); Kitashin, Oleg, 140003 Lubertsy (RU); Dubrovin, Dmitry, 121614 Moskau (RU)
(74) Vertreter: Jeck, Anton

(57) **Zusammenfassung**

Die Erfindung betrifft das Gebiet der Aquakultur und kann für die Verwendung in Wasserrezirkulationsanlagen (WRA), vorgesehen für die industrielle Züchtung von Wasserorganismen, verwendet werden. Eine Stabilisierungsanlage für den pH-Wert von Wasser in einer Ammoniumstickstoff-Entfernungseinheit aus Zeolith-Wasserfiltern bildet einen Block (1) der Automatisierung und Steuerung, umfassend einen IBM-PC-kompatiblen Computer mit installiertem Programm für PC ("Das Programm der Parametersteuerung von Wasser im WRA"), einen Behälter (2) für trockenes NaOH, einen Förderer (3), eine Zirkulationspumpe (4), einen Behälter (5) für die Auflösung des trockenen NaOH, einen Waschwasserbehälter (6), einen zweiten Behälter (8) für Schlamm (7), die Ableitungspumpe für das Wasser mit hoher Konzentration von pH, einen ersten Tank (9) für Schlamm, eine Wasserversorgungspumpe (10) für das Wasser mit einer niedrigen Konzentration des pH-Werts, einen Ableitungsblock (11) für Sedimentationsfraktionen, eine Pumpe (12) zum Bewegen von Sedimentationsfraktionen, ein Filter (13), einen ersten Verschluss (14), einen zweiten Verschluss (15), einen dritten Verschluss (16), einen vierten Verschluss (17), einen fünften Verschluss (18), einen sechsten Verschluss (19) und einen siebten Verschluss (20). Dabei sind die Eingänge und Ausgänge der erwähnten Elemente zwischen einander in Übereinstimmung mit dem Schema in der Fig. 1 angeschlossen. Das technische Ergebnis aus der Nutzung der Erfindung besteht im Wesentlichen in der Abkürzung der Zeit der Ausscheidung von Ammonium-Stickstoff aus dem Waschwasser der Zeolith-Filter der WRA.

## Beschreibung

Die Erfindung betrifft das Gebiet der Aquakultur und kann zur Verwendung in Wasserrezirkulationsanlagen (WRA), vorgesehen für die industrielle Züchtung von Wasserorganismen, verwendet werden.

Bekannt ist das Modul FTIE (www.permanet.ru), bestehend aus vier Fischbecken mit einem Volumen von je 15,7 m³, Trommelfiltern zur mechanischen Reinigung von Wasser, einem Bioreaktor (Biofilter), einem Pumpenschacht, vier Pumpen (eine Pumpe für Wasserzirkulation und eine Pumpe für Wasserzuleitung in den Bioreaktor und je eine Reservepumpe), Systemen zur Sättigung des Wassers mit Sauerstoff (Oxygenator, Typ Oxytrans 700), einer Einheit zur UV-Desinfektion, einem Wasser-pH-Stabilisierungssystem, einem elektronischen Betriebs-Steuersystem für WRA mit Alarmsystem, das die Stabilisierung des pH-Werts von Wasser in für die industrielle Zucht von Hydrobionten verwendeten WRA sichert. Ein Nachteil dieses aus dem Stand der Technik bekannten Moduls ist, dass es eine relativ hohe Zerstörung von gezüchteten Hydrobionten aufgrund der Unwirksamkeit des niedrigen pH-Werts des Wassers in den Fischbecken gibt.

Die nach dem technischen Wesen und dem erreichbaren Ergebnis der vorgeschlagenen Stabilisierungsvorrichtung nächstliegende bekannte Vorrichtung in Bezug auf den pH-Wert von Wasser für die industrielle Zucht von Wasserorganismen ist eine Vorrichtung zur Steuerung der physikalisch-chemischen Parameter von wässrigen Umgebungen (USSR Nr. 1608626, op. 23.11.90, "Vorrichtung zur Steuerung der physikalischen und chemischen Parameter von Wasserumgebungen", Bulletin Nr. 43). Die Anlage zur Steuerung von physikalischen und chemischen Parametern von wässrigen Umgebungen (insbesondere des pH-Werts von Wasser) umfasst einen Behälter für das wässrige Medium, einen Sensor, einen Sollwertsteller, einen Regler und ein Stellglied. Dieses besteht aus Arbeits- und Hilfsspaltkammern mit Elektroden, die durch eine poröse Membran getrennt und an eine Stromquelle angeschlossen sind, während die Elektroden der Arbeitskammer porös ausgeführt sind. Weiter umfasst die Anlage eine Arbeitskammer, die in getrennte Abteilungen (Gastaschen) eingeteilt ist, wobei eine Seite der Arbeitskammer, die der porösen Membran zugewandt ist, mit einer porösen Elektrode versehen ist, und in der anderen Seite der Kammer die Abteilungen der Arbeitskammer (Gastaschen) mit Gasquellen vereinigt sind.

Die oben erwähnte bekannte Anlage wird als Prototyp betrachtet. Ihr Nachteil ist die hohe Zerstörung von Wasserorganismen bei ihrer Zucht in Umlaufwasseranlagen (WRA) aufgrund der Verringerung der organoleptischen Eigenschaften bis hin zur Vergiftung des Fisches mit Ammoniumstickstoffprodukten.

Um die Sicherheit von Wasserorganismen im Laufe ihrer Zucht in den WRA mit akzeptabler organoleptischer Qualität zu gewährleisten, werden in der Regel Zeolith-Filter verwendet, die eine periodische Regeneration benötigen. Dies ist dadurch bedingt, dass das Filterelement der Zeolith-Filter, das Klinoptilolith (Sorptionsmittel), eine obere Austauschkapazität zur Entfernung des Ammonium-Stickstoffs aus dem Wasser besitzt, und zwar 5 mg pro ein Gramm Sorbens. Während der Regeneration tritt Ammoniumstickstoff aus dem Zeolith-Filter in das Waschwasser ein, das sich dann aus dem Waschwasser zur Ammoniumstickstoff-Entfernungseinheit bewegt.

Der hohe pH-Wert im erwähnten Wasser fördert die Überführung von Ammonium in die nicht ionisierte Form von Ammoniak, die leicht aus der Lösung während ihrer intensiven Belüftung geblasen wird. Bei niedrigen pH-Werten von Wasser verzögert sich das Entfernen von Ammoniumstickstoff aus der Waschlösung. Dieser Zeitraum kann 10 bis 25 Tage dauern, was für die industrielle Produktion von Hydrobionten nicht akzeptabel ist.

Bei der Regenerierung von Zeolith-Filtern erhält die Ammoniumstickstoff-Entfernungseinheit zusammen mit dem Waschwasser organische Substanzen (bis zu 400 mg/l), die von Mikroorganismen unter Freisetzung einer großen Menge von CO₂ assimiliert werden. Die Anwesenheit von CO₂ senkt den pH-Wert des Waschwassers. Der letztere Umstand verlangsamt auch den Prozess der Entfernung von Ammoniumstickstoff aus dem Waschwasser. Das Verfahren zum Regenerieren von Zeolithfiltern umfasst den Schritt, bei dem das Zeolith-Filter mit sauberem Wasser gewaschen wird, und zwar mit einem Verlust von bis zu 20 - 30% des Waschwassers bei einer hohen Konzentration des pH-Werts. Dieser Umstand führt zu einer Abnahme des pH-Werts des Waschwassers in der Ammoniumstickstoff-Entfernungseinheit.

In der Tabelle 1 ist die Abhängigkeit der Änderungen im pH-Wert des Waschwassers in der Ammoniumstickstoff-Entfernungseinheit bei einer bestimmten Waschprozessdauer und Temperatur des Waschwassers (das Waschwasservolumen beträgt 1600 m³) gezeigt.

**Tabelle 1**

| Wassertemperatur, °C | pH-Wert des Wassers im Fischtank der Ammoniumstickstoff-Entfernungseinheit aus dem Waschwasser von Zeolith-Filtern | | | | | | |
|---|---|---|---|---|---|---|---|
| | Tag 1 | Tag 2 | Tag 3 | Tag 4 | Tag 5 | Tag 6 | Tag 7 |
| 15 | 10,10 | 9,70 | 9,30 | 8,90 | 8,50 | 8,10 | 7,70 |
| 20 | 10,10 | 9,58 | 9,06 | 8,54 | 8,02 | 7,50 | 6,98 |
| 25 | 10,10 | 9,52 | 8,94 | 8,36 | 7,78 | 7,20 | 6,62 |

Aus Tabelle 1 ist ersichtlich, dass der pH-Wert um 24 - 35% abnimmt, wenn das Verfahren zur Entfernung von Ammoniumstickstoff aus dem Waschwasser durchgeführt wird.

Wenn der pH-Wert im Waschwasser bei der Entfernung von Ammoniumstickstoff aus dem Waschwasser nicht wiederhergestellt wird, wird der Regenerierungsprozess der Zeolith-Filter mehrmals verzögert. Die Restkonzentration von Ammoniumstickstoff im Waschwasser erreicht ebenfalls nicht das erforderliche Niveau. Sekundär beeinflussen diese Prozesse die Volumina des mit Wasserorganismen versorgten Wassers und erhöhen die Gefahr von Fischsterben, insbesondere im Prozess der Verkaufsvorbereitung, da eine der Hauptaufgaben der Funktion der Ammoniumstickstoff-Entfernungseinheit die rechtzeitige Vorbereitung für die geplante Spülung der Zeolith-Filter ist, die auch für die Verkaufsvorbereitung von Hydrobionten verwendet werden.

Eine Korrektur des pH-Werts des Waschwassers der Ammoniumstickstoff-Entfernungseinheit mit Hilfe von Zeolith-Filtern wird in der Regel einmal nach der Beendigung des Zyklus der Spülung aller für die Wasserreinigung im WRA verwendeten Zeolith-Filter durch eine Zugabe von NaOH in die Ammoniumstickstoff-Entfernungseinheit vorgenommen, wobei die Regeneration des pH-Werts im Waschwasser auf einen Wert von nicht niedriger als 10,1 gewährleistet ist.

Das Problem, das die vorliegende Erfindung lösen soll, besteht in der Erhöhung der Produktivität bei der Zucht von Wasserorganismen in WRA, indem ihre Verluste und die WRA-Bedienungszeit reduziert werden.

Das technische Ergebnis, das von der Verwendung der vorgeschlagenen neuen technischen Lösung erwartet wird, ist die Verkürzung der Beseitigungszeit von Ammoniumstickstoff aus dem Waschwasser von Zeolith-Filtern der WRA.

Erfindungsgemäß ist daher eine Stabilisierungsanlage für den pH-Wert des Wassers im Block der Entfernung von Ammonium-Stickstoff aus dem Waschwasser der Zeolith-Filter gebildet durch Block der Automatisierung und Steuerung vorgesehen mit
- einer prozessorgestützten Recheneinheit, insbesondere einem IBM-PC-kompatiblem Computer, vorzugsweise mit installiertem Programm für den PC "Das Programm der Parametersteuerung von Wasser im WRA", wobei die Recheneinheit und/oder das Programm mit vier Informations- und Kommunikationsausgängen, und vier Informations- und Kommunikationseingängen gebildet sein kann,
- einem Behälter für trockene NaOH
- einem Förderer
- einer Zirkulationspumpe, wobei der Behälter für trockenes NaOH, der Förderer und die Zirkulationspumpe jeweils einen Informations- und Schalteingang, einen Eingang und einen Informations- und Schaltausgang aufweisen,
- einem ersten Behälter für die Auflösung des trockenen NaOH mit Informations- und Schaltausgang, mit drei Eingängen, und mit drei Ausgängen,
- einem Waschwasserbehälter mit Informations- und Schaltausgang, einem Ausgang und einem Eingang,
- einem zweiten Tank für Schlamm mit Informations- und Schaltausgang, einem Eingang und zwei Ausgängen,
- einer Ableitungspumpe für das Wasser mit der hohen Konzentration von pH (8), mit Informations- und Schalteingang, einem Ausgang und einem Eingang,
- einem ersten Tank für Schlamm mit Informations- und Schaltausgang, einem Eingang und zwei Ausgängen,
- einer Wasserversorgungspumpe für Wasser mit einer niedrigen Konzentration von pH, mit Informations- und Schalteingang, einem Eingang, zwei Ausgängen,
- einem Ableitungsblock für Sedimentationsfraktionen, mit zwei Eingängen und einem Ausgang zur Entsorgung,
- einer Pumpe zum Bewegen von Sedimentationsfraktionen, mit einem Informations- und Schalteingang, einem Eingang und einem Ausgang,
- einem Filter, mit einem Informations- und Schalteingang, einem Eingang und zwei Ausgängen, und
- einem ersten bis siebten Verschluss, mit jeweils einem Informations- und Schalteingang und jeweils einem Ausgang und einem Eingang.
   Nach einer bevorzugten Weiterbildung der Erfindung ist es vorgesehen, dass der erste Informations- und Schalteingang des Blocks der Automatisierungs- und Steuerungsautomatik mit dem Informations- und Kommunikationsausgangs des Tanks zum Auflösen von trockenem NaOH verbunden ist,
- dass der erste Tank für Schlamm, der zweiter Tank für Schlamm und der Filter, der erste Informations- und Schaltausgang des Blocks der Automatisierungs- und Steuerungsautomatik mit dem Informations- und Schalteingang des Tanks von trockenem NaOH verbunden ist,
- dass der dritte Informations- und Schalteingang des Blocks der Automatisierungs- und Steuerungsautomatik mit dem Informations- und Schaltausgang vom Waschwasserbehälter verbunden ist,
- dass der erste Informations- und Schaltausgang des Blocks der Automatisierungs- und Steuerungsautomatik mit dem Informations- und Schalteingang des Tanks von trockenem NaOH (2) verbunden ist,
- dass der zweite Informations- und Schaltausgang des Blocks der Automatisierungs- und Steuerungsautomatik mit den Informations- und Schalteingänge der Wasserversorgungspumpe für das Wasser mit einer niedrigen Konzentration von pH verbunden ist,
- dass der erste Verschluss, der siebte Verschluss, der zweite Verschluss, der sechste Verschluss mit der Ableitungspumpe für das Wasser mit der hohen Konzentration von pH verbunden sind,
- dass der dritte Informations- und Schaltausgang des Blocks der Automatisierungs- und Steuerungsautomatik mit Informations- und Schalteingang des Förderers verbunden ist,
- dass der vierte Informations- und Schaltausgang des Blocks der Automatisierungs- und Steuerungsautomatik mit den Informations- und Schalteingänge der Zirkulationspumpe, der Pumpe zum Bewegen von Sedimentationsfraktionen, des fünften Verschlusses, des vierten Verschlusses und des dritten Verschlusses verbunden ist,
- dass der Ausgang des Behälters für trockene NaOH mit dem Eingang des Förderers der Ausgang des Förderers mit dem zweiten Eingang des Behälters für die Auflösung des trockenen NaOH angeschlossen, der dritte Eingang des Behälters für die Auflösung des trockenen NaOH mit dem Eingang der Zirkulationspumpe, und der Eingang der Zirkulationspumpe mit dem ersten Ausgang des Behälters für die Auflösung des trockenen NaOH verbunden ist,
- dass der dritter Ausgang des Behälters für die Auflösung des trockenen NaOH mit dem Eingang des fünften Verschlusses, der Ausgang des fünften Verschlusses mit dem Eingang der Pumpe zum Bewegen von Sedimentationsfraktionen verbunden ist,
- dass der Ausgang der Pumpe zum Bewegen von Sedimentationsfraktionen mit einem zweiten Eingang des Ableitungsblocks für Sedimentationsfraktionen verbunden ist, dessen erster Eingang ist mit dem Ausgang des sechsten Verschluss verbunden ist,
- dass der Ausgang des Waschwasserbehälters mit dem Eingang der Wasserversorgungspumpe für das Wasser mit niedriger Konzentration von pH verbunden ist, deren erster Ausgang ist mit dem Eingang des siebten Verschlusses und der zweite Ausgang der Wasserversorgungspumpe für das Wasser mit niedriger Konzentration von pH mit dem Eingang des ersten Verschlusses verbunden ist,
- dass der Ausgang der Wasserversorgungspumpe für das Wasser mit niedriger Konzentration von pH mit dem zweiten Eingang des Filters und der Ausgang des siebten Verschlusses mit dem ersten Eingang des Behälters für die Auflösung des trockenen NaOH verbunden ist, dessen zweiter Ausgang mit dem ersten Eingang des Filters und sein erster Ausgang mit dem Eingang des sechsten Verschlusses verbunden ist,
- dass der zweite Ausgang des Behälters für die Auflösung des trockenen NaOH mit dem Eingang des zweiten Verschlusses , der Ausgang des Verschlusses (15) ist mit dem Eingang des ersten Behälters für den Schlamm und sein Ausgang ist mit dem Eingang des vierten Verschlusses verbunden ist,
- dass der Ausgang des ersten Behälters für den Schlamm mit dem Eingang der Pumpe zum Bewegen der Sedimentfraktion und der erste Ausgang des Behälters für den Schlamm mit den Eingang des dritten Verschlusses verbunden ist,
- dass der Ausgang des Behälters für den Schlamm mit dem Eingang der Pumpe zum Bewegen der Sedimentfraktion und der zweite Ausgang des zweiten Behälters für Schlamm ist mit dem Eingang der Ableitungspumpe für das Wasser mit hoher Konzentration von pH verbunden ist, dessen Ausgang mit einem Eingang des Waschwasserbehälters angeschlossen ist, und/oder
- dass der Ausgang des Ableitungsblocks für Sedimentfraktionen zur Entsorgung geht.

Das beanspruchte technisches Ergebnis wird dadurch erreicht, dass die Einheit zur Stabilisierung des pH-Werts in der Ammoniumstickstoff-Entfernungseinheit mit den Zeolith-Wasserfiltern einen Automatisierungsblock mit einer Steuerung bildet, umfassend einen IBM-PC-kompatiblen Computer mit installiertem Programm, und zwar "Das Programm der Parametersteuerung von Wasser im WRA" (Staatliche Registrierungs-Nr. 2016662750, veröffentlicht am 20.12.2016) mit ersten, zweiten, dritten und vierten Informations- und Kommunikationsausgängen, mit einem Behälter für trockenes NaOH, mit Eingang und zwei Ausgängen, Informations- und Schalt-Eingang bzw. -Ausgang, mit einem Förderer mit Eingang, Informations- und Schalt-Eingang bzw. -Ausgang, mit einer Zirkulationspumpe mit Eingang und Ausgang, Informations- und Schalt-Eingang bzw. -Ausgang, mit einem Behälter für die Auflösung des trockenen NaOH mit Informations- und Schaltausgang, mit ersten, zweiten und dritten Ein-bzw. Ausgängen, mit einem Waschwasserbehälter mit Ausgang und Eingang, Informations- und Schaltausgang, mit einem ersten Behälter für Schlamm mit Eingang, erstem und zweiten Ausgang, Informations- und Schaltausgang, mit einem zweiten Behälter für Schlamm mit Eingang, erstem und zweitem Ausgang, Informations- und Schaltausgang, mit einer Ableitungspumpe für das Wasser mit hoher Konzentration des pH-Werts mit Eingang und Ausgang, Informations- und Schalteingang, mit einer Wasserversorgungspumpe für Wasser mit einer niedrigen Konzentration des pH-Werts mit Eingang, erstem und zweiten Ausgang, Informations- und Schalteingang, mit einem Ableitungsblock für Sedimentationsfraktionen mit erstem und zweiten Eingang und einem Ausgang zur Entsorgung, mit einer Pumpe zum Bewegen von Sedimentationsfraktionen mit einem Eingang und einem Ausgang, einem Informations- und Schalteingang, mit einem Filter mit einem Eingang und einem Ausgang, einem Informations- und Schalteingang, mit einem Filter mit einem ersten und zweiten Ein-bzw. Ausgang, einem Informations- und Schaltausgang, mit einem ersten bis siebten Verschluss mit einem Ausgang und einem Eingang, einem Informations- und Schalteingang, wobei der erste Informations- und Schalteingang des Automatisierungs- und Steuerungsblocks mit den Informations- und Kommunikationsausgängen des Behälters zum Auflösen von trockenem NaOH verbunden ist, der erste Behälter für Schlamm, der zweite Behälter für Schlamm und der Filter, der erste Informations- und Schaltausgang des Automatisierungs- und der Steuerungsblocks mit dem Informations- und Schalteingang des Tanks mit trockenem NaOH verbunden ist, der dritte Informations- und Schalteingang des Automatisierungs- und Steuerungsblocks mit dem Informations- und Schaltausgang des Waschwasserbehälters verbunden ist, der erste Informations- und Schaltausgang des Automatisierungs- und Steuerungsblocks mit dem Informations- und Schalteingang des Tanks mit trockenem NaOH verbunden ist, der zweite Informations- und Schaltausgang des Automatisierungs- und Steuerungsblocks mit den Informations- und Schalteingängen der Wasserversorgungspumpe für Wasser mit einer niedrigen Konzentration des pH-Werts verbunden ist, der erste Verschluss, der zweite Verschluss, der sechste Verschluss, der siebte Verschluss, der Filter und die Ableitungspumpe für Wasser mit der hohen Konzentration des pH-Werts verbunden ist, der dritte Informations- und Schaltausgang des Automatisierungs- und Steuerungsblocks mit dem Informations- und Schalteingang des Förderers verbunden ist, der vierte Informations- und Schaltausgang des Automatisierungs- und Steuerungsblocks mit den Informations- und Schalteingängen der Zirkulationspumpe, der Pumpe zum Bewegen von Sedimentationsfraktionen, dem dritten Verschluss, dem vierten Verschluss und dem fünften Verschluss verbunden ist, der Ausgang des Behälters für trockenes NaOH mit dem Eingang des Förderers verbunden ist, der Ausgang des Förderers mit dem zweiten Eingang des Behälters für die Auflösung des trockenen NaOH verbunden ist, der dritte Eingang des Behälters für die Auflösung des trockenen NaOH mit dem Eingang der Zirkulationspumpe verbunden ist, und der Eingang der Zirkulationspumpe mit den ersten Ausgang des Behälters für die Auflösung des trockenen NaOH verbunden ist, dessen dritter Ausgang mit dem Eingang des fünften Verschlusses verbunden ist, der Ausgang des fünften Verschlusses mit dem Eingang der Pumpe zum Bewegen von Sedimentationsfraktionen verbunden ist, dessen Ausgang mit einem zweiten Eingang des Ableitungsblocks für Sedimentationsfraktionen verbunden ist, dessen erster Eingang mit dem Ausgang des sechsten Verschlusses verbunden ist, der Ausgang des Waschwasserbehälters mit dem Eingang der Wasserversorgungs-pumpe für Wasser mit niedriger Konzentration des pH-Werts verbunden ist, deren erster Ausgang mit dem Eingang des siebten Verschlusses verbunden ist, und der zweite Ausgang der Wasserversorgungspumpe für Wasser mit niedriger Konzentration des pH-Werts mit dem Eingang des ersten Verschlusses verbunden ist, dessen Ausgang mit dem zweiten Eingang des Filters verbunden ist, der Ausgang des siebten Verschlusses mit dem ersten Eingang des Behälters für die Auflösung des trockenen NaOH verbunden ist, dessen zweiter Ausgang mit dem ersten Eingang des Filters verbunden ist, der erste Ausgang des Filters mit dem Eingang des sechsten Verschlusses verbunden ist, dessen Ausgang mit dem ersten Eingang des Ableitungsblocks für Sedimentationsfraktionen verbunden ist, und der zweite Ausgang des Filters mit dem Eingang des zweiten Verschlusses, der Ausgang des Verschlusses mit dem Eingang des ersten Behälters für den Schlamm verbunden ist, und sein erster Ausgang mit dem Eingang des vierten Verschlusses verbunden ist, dessen Ausgang mit dem Eingang der Pumpe zum Bewegen der Sedimentfraktion verbunden ist, und der zweite Ausgang des ersten Behälters für Schlamm mit dem zweiten Eingang des zweiten Behälters für Schlamm verbunden ist, der erste Ausgang des Behälters für Schlamm mit dem Eingang des dritten Verschlusses verbunden ist, dessen Ausgang mit dem Eingang der Pumpe zum Bewegen der Sedimentfraktion verbunden ist, und der zweite Ausgang des zweiten Behälters für Schlamm mit dem Eingang der Ableitungspumpe für Wasser mit hoher Konzentration des pH-Werts verbunden ist, dessen Ausgang mit einem Eingang des Waschwasserbehälters verbunden ist, und der Ausgang des Ableitungsblocks für Sedimentfraktionen zur Entsorgung geht.

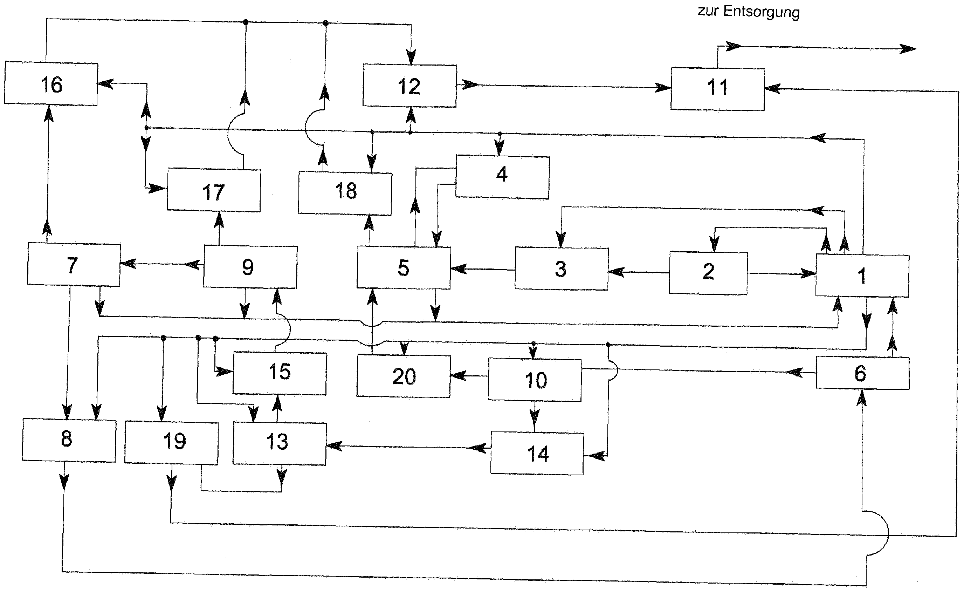

Die Vorbereitung für den Betrieb der Wasser-pH-Stabilisierungseinheit der Ammoniumstickstoff-Ausscheidungseinheit aus dem Waschwasser der Zeolith-Filter beinhaltet die Durchführung der folgenden Vorgänge. Zu Beginn wird das trockene NaOH in einen Behälter für trockenes NaOH gefüllt. Danach wird eine Füllstand-Automatisierungs- und Steuereinheit 1 (Fig. 1) eingeschaltet.
Das Gerät enthält einen IBM-PC-kompatiblen Computer, auf dem das Computerprogramm "Das Wasserparameter-Verwaltungsprogramm in der USV" installiert ist.
Der Computer zeigt Information zum pH-Wert des Wassers in dem Tank mit Spülwasser 6 (Fig. 1) an.
Das Wasser gelangt zu seinem dritten informationsschaltenden Eingang vom informationsschaltenden Ausgang des Tanks mit Spülwasser 6 (Fig. 1).
Die Information über den Füllstand von trockenem NaOH in dem Behälter für trockenes NaOH 2 (Fig. 1) kommt zu dem zweiten Informationsschalteingang der Füllstand-Automatisierungs- und Steuereinheit 1 (Fig. 1).
Der Computer trifft basierend auf den Informationen (Daten) vom informationsschaltenden Ausgang eines Behälters für trockenes NaOH 2 (Fig. 1) folgende Entscheidungen:
- Wenn das Schüttniveau von NaOH im Behälter für trockenes NaOH unter dem zulässigen Pegelwert ist, wird ein Befehl aus dem ersten Informations- und Schaltausgang des Automatisierungs- und Steuerungsblocks an den Informations- und Schalteingang des Behälters für trockenes NaOH gegeben, diesen Behälter mit trockenem NaOH zu beladen. Das untere Schüttniveau des zulässigen trockenen NaOH im Behälter für trockenes NaOH wird dabei unter der Voraussetzung gewählt, dass ein ununterbrochener Betrieb der beanspruchten Vorrichtung an 11 - 12 Tagen stattfindet.
- Liegt das Niveau des trockenen NaOH oberhalb des unteren zulässigen Pegels im Behälter des trockenen NaOH und der pH-Wert des Wassers im Behälter mit dem Waschwasser innerhalb akzeptabler Grenzen, dann erzeugt der Automatisierungs- und Steuerungsblocks keinen Ladebefehl.
- Wenn der pH-Wert des Wassers im Behälter mit dem Waschwasser unter einem Grenzwert und eine Schüttung des NaOH oberhalb des unteren zulässigen Werts des Pegels im Behälter für trockenes NaOH liegt, wird über den zweiten Informations- und Schaltausgang des Automatisierungs- und Steuerungsblocks und über eine erste Schalteingangsinformation der Wasserversorgungspumpe die Wasserversorgungspumpe mit einer niedrigen Konzentration des pH-Werts (< 11) eingeschaltet. Über den Ausgang des Behälters mit Waschwasser wird dann Wasser dem Eingang des siebten Verschlusses zugeführt. Vom Ausgang dieses Verschlusses tritt das Wasser in den ersten Eingang des Behälters zum Auflösen des trockenen NaOH ein. Der Ausgang des Behälters des trockenen NaOH ist mit dem Trockenförderer für NaOH verbunden, der an seinem Ausgang das trockene NaOH zum zweiten Eingang des Behälters zum Auflösen des trockenen NaOH liefert. Die Umwälzpumpe, die am ersten Ausgang des Behälters zum Lösen des trockenen NaOH angeschlossen ist, fördert dadurch Wasser mit einer geringen Konzentration des pH-Werts, welches noch ungelöste NaOH-Körner enthält, und liefert dieses an einen dritten Eingang des Behälters zur Lösung des trockenen NaOH. Während des kontinuierlichen Pumpens von Wasser tritt die endgültige Auflösung von Kaolin in Wasser auf. Wenn das Mischen beginnt, begleitet von den oben erwähnten ungelösten NaOH-Körnern, werden Informationen über die Konzentration des pH-Werts im Wasser kontinuierlich vom Informationsschaltausgang zum ersten Informationsschalteingang des Automatisierungs- und Steuerungsblocks geliefert, um die vollständige Auflösung des trockenen NaOH zu erreichen. Beim Erreichen eines pH-Werts des Wassers von 11,2 im Behälter zum Auflösen des trockenen NaOH gibt der Automatisierungs- und Steuerungsblock einen Befehl aus, um den Betrieb des Förderers zu stoppen, wobei dieser über den dritten Informationsschaltausgang an den Informationsschalteingang des Förderers übertragen wird. Im Fall eines pH-Werts des Wassers von etwa 9,9 im Behälter zum Auflösen des trockenen NaOH wird vom dritten Informations- und Schaltausgang des Automatisierungs- und Steuerungsblocks zum Informationseingang des Förderers ein Befehl zu dessen Arbeitsaufnahme gegeben. Wasser mit einer hohen Konzentration des pH-Werts am zweiten Ausgang des Behälters zum Lösen des trockenen NaOH ist mit dem ersten Eingang des Filters verbunden. Der Ausgang des Filters gibt das Wasser an den Eingang des zweiten Verschlusses ab, wobei ein Signal für die Öffnung des Verschlusses vom zweiten Informations- und Schaltausgang des Automatisierungs- und Steuerungsblocks zum Informations- und Schalteingang des zweiten Verschlusses übertragen wird. Dann wird dieses Wasser vom Ausgang des zweiten Verschlusses dem Eingang des ersten Behälters zum Absetzen von Wasser zugeführt. Der erste Behälter für Schlammwasser übernimmt eine Pufferfunktion für die letzten aufzulösenden relativ großen NaOH-Körner, wobei Fremdkörper und Verunreinigungen im Allgemeinen wasserunlöslich sind und somit nicht aufgelöst werden.

Wenn Wasser mit einem hohen pH-Wert im ersten Wasserbehälter gesammelt ist, tritt das Wasser von seinem ersten Ausgang in den Eingang des zweiten Wasserbehälters ein. In dem zweiten Behälter zum Absetzen von Wasser tritt eine Ausfällung der unlöslichen Aufschlämmung und der in Wasser nicht löslichen Einschlüsse auf.

Wenn das Wasser den zweiten Behälter erreicht, d. h., wenn der pH-Wert des Wassers größer als 11 ist, wird über den Informations- und Schaltausgang des Automatisierungs- und Steuerblocks eine entsprechende Information aufgenommen, die über dieses Ereignis unterrichtet. Im Weiteren gibt sie über ihren zweiten Informations- und Schaltausgang einen Befehl an den Informations- und Schalteingang einer Wasserabgabepumpe, um diese einzuschalten. Von dem zweiten Ausgang des zweiten Behälters für Schlamm wird Wasser mit einer hohen Konzentration des pH-Werts (≥ 11) dem Eingang der Wasserabführpumpengruppe zugeführt und von dort weiter von seinem Ausgang dem Behältereingang mit Waschwasser zugeführt. Beim Erreichen eines bestimmten Wasserstandes im zweiten Behälter für Wasserschlamm wird über seinen Informations- und Schaltausgang das Auftreten des Ereignisses an den Automatisierungs- und Steuerungsblock übertragen, der seinerseits über einen seiner Ausgänge einen Befehl an die Wasserabgabepumpe gibt, den Wassertransport zu stoppen. Vom Ausgang des Behälters mit Waschwasser gelangen Informationen über den aktuellen pH-Wert des Wassers in den Eingang des Automatisierungs- und Steuerungsblocks zur Füllstands- und Programmsteuerung. Bei Erreichen der vorgegebenen pH-Werte im Behälter mit dem Waschwasser werden Befehle vom Automatisierungs- und Steuerungsblock über dessen zweite und dritte Informations- und Schaltausgänge an den Informations- und Schalteingang der Abgabepumpe der Wasserversorgungs-einheit und an den Schalteingang des Förderers gesendet, um deren Betrieb zu stoppen.

Mit den Informations- und Schaltausgängen des ersten Behälters für Schlammwasser, vom Ausgang des zweiten Behälters für Schlammwasser und dem Behälter zum Auflösen des trockenen NaOH werden Informationen über die Höhe des Sediments (der Sedimentfraktionen) im Boden abgegeben. Ein Teil des Wassers dieser Behälter wird kontinuierlich dem ersten Informations- und Schalteingang des Automatisierungs- und Steuerblocks zugeführt. Wenn die Grenzwerte der Sedimentfraktionen im ersten Behälter für Schlammwasser überschritten sind, wird das Ereignis über dessen Informations- und Schaltausgang dem ersten Informations- und Schalteingang des Automatisierungs- und Steuerblocks zugeführt. Dabei werden dort zuletzt Befehle zur Öffnung des vierten Verschlusses erzeugt, die ihm mittels des vierten Information- und Schaltausgangs des Automatisierungs- und Steuerblocks an seinem Informations- und Schalteingang zur Verfügung gestellt werden, um Sediment zur Sedimentfraktionspumpe zu bringen. Der vierte Informations- und Schaltausgang des Automatisierungs- und Steuerblocks liefert ebenfalls den Pumpbefehl an den Informations- und Schalteingang der Sedimentfraktionspumpe. In dieser wird die Sedimentfraktion aus dem ersten Ausgang des ersten Behälters für Schlamm zum Eingang des vierten Verschlusses und weiter von dessen Ausgang zum ersten Eingang des zweiten Behälters für Schlamm gefördert. Wenn die Grenzwerte der Sedimentfraktion im zweiten Behälter für das Schlammwasser überschritten sind, wird eine Information über dieses Ereignis über seinen Informations- und Schaltausgang an den Automatisierungs- und Steuerblock geliefert, der wiederum einen Befehl über seinen vierten Informations- und Schaltausgang an den Informations- und Schalteingang des dritten Verschlusses sendet. Dadurch erfolgen die Öffnung des dritten Verschlusses und gleichzeitig damit das Einschalten der Pumpe. Danach wird die Sedimentfraktion aus dem ersten Ausgang des zweiten Behälters für den Schlamm dem Eingang des dritten Verschlusses zugeführt, und dann wird sie über dessen Ausgang und die Sedimentfraktionspumpe weiterbewegt. Das Deaktivieren der Sedimentfraktions-pumpe und das Schließen des dritten Verschlusses erfolgen mittels Befehl über den vierten Informations- und Schaltausgang des Automatisierungs- und Steuerblocks, der dem Informations- und Schalteingang der Sedimentfraktionspumpe zugeführt wird. Die Steuerung der Sedimentfraktionspumpe und des dritten Verschlusses wird auf der Grundlage der Informationen über den unteren Grenzwert des Sedimentfraktionspegels im zweiten Behälter für das Schlammwasser erreicht. Beim Erreichen des oberen Grenzwerts des Füllstands im Behälter für die Auflösung des trockenen NaOH wird eine Information darüber an den ersten Informations- und Schalteingang des Automatisierungs- und Steuerblocks geliefert. In Reaktion auf dieses Ereignis wird ein Befehl erzeugt und über den vierten Informations- und Schaltausgang an den Informations- und Schalteingang des fünften Verschlusses zu dessen Öffnung geliefert.

Dann wird die Sedimentfraktion aus dem Behälter für die Auflösung des trockenen NaOH dem Eingang des fünften Verschlusses und ferner über dessen Ausgang der Sedimentfraktionspumpe zugeführt. Das Pumpen und das Schließen des fünften Verschlusses findet mittels eines über den vierten Informations- und Schaltausgang des Automatisierungs- und Steuerblocks übertragenen Befehls statt, der zu den Informations- und Schalteingängen der Sedimentfraktionspumpe und des fünften Verschlusses auf der Grundlage der Informationen über den unteren Grenzwert des Sedimentfraktionspegels im Behälter für das trockene NaOH gelangt. Die Information über das Auftreten dieses Ereignisses wird vom Informations- und Schaltausgang des Behälters an den ersten Informations- und Schalteingang des Automatisierungs- und Steuerblocks gesendet. Wird der obere Höhengrenzwert der Sedimentfraktionen im ersten Behälter für Schlammwasser, im zweiten Tank für Schlamm und im Behälter für trockenes NaOH gleichzeitig erreicht, wird das folgende Verfahren eingeleitet:
- Reinigung des zweiten Behälters für Schlamm;
- Reinigung des ersten Behälters für Schlamm;
- Reinigung des Behälters zum Auflösen des trockenen NaOH.

Die periodische Reinigung des Filters wird in der folgenden Reihenfolge durchgeführt. Informationen über den Innendruck im Filter werden über seinen Informations- und Schaltausgang an den Informations- und Schalteingang des Automatisierungs- und Steuerblocks geliefert. Wenn die Grenzwerte für die Druckanzeige im Filter überschritten sind, wird über den zweiten Informations- und Schaltausgang des Automatisierungs- und Steuerblocks ein Befehl zum Schließen an den Informations- und Schalteingang des siebten Verschlusses, ein Befehl zum Öffnen an den Informations- und Schalteingang des ersten Verschlusses und ein Befehl zum Schließen an den Informations- und Schalteingang des zweiten Verschlusses gesendet. Gleichzeitig wird ein Befehl zum Öffnen desselben an den Informations- und Schalteingang des sechsten Verschlusses gesendet. Die Information über die Wasserleistung der Wasserförderpumpe mit niedriger Konzentration des pH-Werts (< 10) geht über den zweiten Informations- und Schaltausgang an den Informations- und Schalteingang des ersten Verschlusses. Dessen Ausgang wird dann dem zweiten Filtereingang zugeführt. Aus dem ersten Ausgang des Filters erreicht dann die Wassersedimentfraktion den Eingang des sechsten Verschlusses, und durch dessen Ausgang wird diese Mischung aus Wasser und Sedimentfraktionen einem ersten Eingang der Sedimentfraktions-Entladeeinheit zugeführt. Der Filterreinigungszyklus wird mittels eines Befehls über den zweiten Informations- und Schaltausgang des Automatisierungs- und Steuerblocks vorgenommen und weist den Informations- und Schalteingang des siebten Verschluss zu seiner Öffnung, den Informations- und Schalteingang des ersten Verschluss zu seiner Schließung, den Informations- und Schalteingang des zweiten Verschluss zu seiner Öffnung und den Informations- und Schalteingang des sechsten Verschlusses zu seiner Schließung an. Als Ergebnis der Ausführung dieses Befehls wird der normale Betrieb des Geräts wiederhergestellt. Wenn die Reinigung des Filters anhalten soll, wird die Sedimentfraktion aus dem Auslass der Pumpe bewegt und über den Eingang der Sedimententfernungseinheit und ihren Ausgang zur Entsorgung geschickt.

Die Erfindung wird nun anhand von Beispielen und einer Übersichts-Figur mit den Elementen der Erfindung näher erläutert.

### Beispiel 1

Nach dem Spülen des Zeolith-Filters zur Entfernung von Ammonium-Stickstoff aus diesem, der in einer geschlossenen Wasserversorgungsanlage (RAS) an der Stelle der vorgesehenen Herstellung von Wasserorganismen montiert ist, überstieg die Konzentration von Ammoniak im Behälter 6 mit dem Waschwasser den Wert von 450 mg/Liter nicht. Die Temperatur des Waschwassers im Tank betrug 20°C. Das Waschwasservolumen im Behälter 6 betrug 100 m³. Die zugeführte Luftmenge zum Spülen des Wassers betrug 1600 m³/h. Im Behälter 2 für trockenes NaOH befanden sich 120 kg trockenes NaOH.

Der pH-Wert des Wassers im Behälter 6 mit dem Waschwasser ist unter dem Grenzwert, aber das Niveau der Trockenrohdichte NaOH ist oberhalb des unteren zulässigen Niveaus in einem Schüttgutbehälter 2 für trockenes NaOH. Somit wird im Wasser ein niedriger pH-Wert gehalten. Über einen Behälter 6 mit dem Waschwasser und eine damit verbundene Wasserversorgungspumpe 10 wird über den Behälter und einen seiner Ausgänge Wasser an den Eingang des siebten Verschlusses 20 gefördert. Vom Ausgang des letzteren wird dieses Wasser zu einem Eingang des Behälters 5 für die Auflösung von trockenem NaOH gefördert. Aus dem Behälter 2 für trockenes NaOH wird über ein Förderband 3 das trockene NaOH an einen zweiten Eingang des Behälters 5 für dessen Auflösung geliefert. Über eine Umwälzpumpe 4 wird über einen dritten Ausgang und einen weiteren Eingang des Behälters 5 das Wasser mit einer niedrigen Konzentration von pH (< 11), das noch eine große Menge an ungelösten NaOH-Körnern aufweist, beständig umgewälzt. Während des kontinuierlichen Pumpens des Wassers (oder eher eines Gemisches aus Wasser mit Körnern von NaOH) werden die NaOH-Körner im Wasser schnell gelöst. Der Verwirbelungsfluss der Mischung erzeugt kontinuierlich Informationen über den aktuellen pH-Wert in der Mischung im Behälter 5, die über einen Informations- und Schaltausgang zu einem Informations- und Schalteingang des Automatisierungs- und Steuerblocks 1 übertragen werden. Wenn ein pH-Wert von 11,2 des Wassers im Behälter 5 erreicht ist, wird eine weitere Förderung von trockenem NaOH vom Automatisierungs- und Steuerblock 1 unterbrochen. Bei einem pH-Wert von 9,9 im Behälter 5 wird die Förderung von trockenem NaOH mittels des Förderbandes 3 über ein Steuersignal des Automatisierungs- und Steuerblocks 1 wieder aufgenommen. Dabei wird auch die Wasserzufuhr mit Wasser mit niedrigem pH-Wert der Wasserversorgungs-einheit 6 fortgesetzt. Wasser mit einem höheren pH-Wert wird dem Behälter 5 zum Auflösen von trockenem NaOH über einen ersten Ausgang des Zeolith-Filters 13 zugeführt. Von einem zweiten Ausgang des Filters 13 wird Wasser mit einem hohen pH-Wert über einen zweiten Verschluss 15 einem ersten Behälter für Schlammwasser 9 geliefert. Der erste Behälter für Schlammwasser 9 hat eine Pufferfunktion für relativ große NaOH-Körner, die noch nicht in der Mischung aufgelöst worden sind, und für unlösliche Fremdstoffe und Verunreinigungen. Der erste Behälter 9 für Schlammwasser mit einem hohen pH-Wert ist über einem Ausgang mit dem Eingang eines zweiten Behälters 7 für Schlammwasser verbunden. In dem zweiten Behälter 7 für das Schlammwasser sind nur geringe Ablagerungen von dispergierten (ungelösten) Körnern von NaOH und unlöslichen Fremdstoffen und Verunreinigungen enthalten. Wenn das Wasser im zweiten Behälter 7 seinen höchsten Stand erreicht, wird eine Nachricht über den Informations- und Schaltausgang an den Automatisierungs- und Steuerblock gesendet. Von einem weiteren Ausgang des zweiten Behälters 7 für das Schlammwasser wird Wasser mit hohem pH-Wert (≥ 11) über eine Wasserpumpe 8 dem Eingang des Waschwasserbehälters 6 zugeführt. Beim Erreichen eines Wasserstands im unteren Bereich des zweiten Behälters 7 für Schlammwasser werden Informationen zu diesem Ereignis an den Automatisierungs- und Steuerblock 1 übertragen, der wiederum die Wasserpumpe 8 ansteuert, um diese zu stoppen. Außerdem werden über den Automatisierungs- und Steuerblock 1 die Wasserpumpe 10 und das Förderband 3 angehalten.

Die Aufrechterhaltung des Soll-pH-Werts des Wassers im Behälter 6 mit dem Waschwasser während der Ausscheidung von Ammoniak-Stickstoff ist durch einen Vergleichstest mit dem Prototyp nachgewiesen, wie es in Tabelle 2 gezeigt ist.

**Tabelle 2**

| Lauf -Nr. | Benennung der Anlage | Volumens des Waschwassers / m³ | Konzentration von Ammoniumstickstoff im Tankwasser mit Waschwasser, mg/Liter | | | | | |
|---|---|---|---|---|---|---|---|---|
| | | | Tag 1 | Tag 2 | Tag 3 | Tag 4 | Tag 5 | Tag 6 |
| 1 | Vorgeschlagene Anlage | 100 | 369,4 | 226,3 | 112,9 | 48,1 | 11,3 | 0,5 |
| 2 | Prototyp | 100 | 453,6 | 384,0 | 327,6 | 281,6 | 244,0 | 213,0 |

Wie aus den in der Tabelle 2 dargestellten Ergebnissen von Vergleichstests der vorgeschlagenen Anlage mit dem Prototyp folgt, garantiert die vorgeschlagene Anlage die Leistung des beanspruchten technischen Ergebnisses.

### Beispiel 2

Nach dem Spülen des Zeolith-Filters zur Entfernung von Ammonium-Stickstoff aus diesem, der in einer geschlossenen Wasserversorgungsanlage (RAS) an der Stelle der vorgesehenen Herstellung von Wasserorganismen montiert ist, überstieg die Konzentration von Ammoniak im Behälter 6 mit dem Waschwasser den Wert von 450 mg/Liter. Die Waschwassertemperatur betrug 20°C. Das Waschwasservolumen im Behälter 6 betrug 60 m³. Die zugeführte Luftmenge zum Spülen des Wassers betrug 1200 m³/h. Im Behälter 2 für trockenes NaOH befanden sich 120 kg trockenes NaOH.

Der pH-Wert des Wassers im Behälter 6 mit dem Waschwasser ist unter dem Grenzwert, aber das Niveau der Trockenrohdichte NaOH ist oberhalb des unteren zulässigen Niveaus in einem Schüttgutbehälter 2 für trockenes NaOH. Somit wird im Wasser ein niedriger pH-Wert gehalten. Über einen Behälter 6 mit dem Waschwasser und eine damit verbundene Wasserversorgungspumpe 10 wird über den Behälter und einen seiner Ausgänge Wasser an den Eingang des siebten Verschlusses 20 gefördert. Vom Ausgang des letzteren wird dieses Wasser zu einem Eingang des Behälters 5 für die Auflösung von trockenem NaOH gefördert. Aus dem Behälter 2 für trockenes NaOH wird über ein Förderband 3 das trockene NaOH an einen zweiten Eingang des Behälters 5 für dessen Auflösung geliefert. Über eine Umwälzpumpe 4 wird über einen dritten Ausgang und einen weiteren Eingang des Behälters 5 das Wasser mit einer niedrigen Konzentration von pH (< 11), das noch eine große Menge an ungelösten NaOH-Körnern aufweist, beständig umgewälzt. Während des kontinuierlichen Pumpens des Wassers (oder eher eines Gemisches aus Wasser mit Körnern von NaOH) werden die NaOH-Körner im Wasser schnell gelöst. Der Verwirbelungsfluss der Mischung erzeugt kontinuierlich Informationen über den aktuellen pH-Wert in der Mischung im Behälter 5, die über einen Informations- und Schaltausgang zu einem Informations- und Schalteingang des Automatisierungs- und Steuerblocks 1 übertragen werden. Wenn ein pH-Wert von 11,2 des Wassers im Behälter 5 erreicht ist, wird eine weitere Förderung von trockenem NaOH vom Automatisierungs- und Steuerblock 1 unterbrochen. Bei einem pH-Wert von 9,9 im Behälter 5 wird die Förderung von trockenem NaOH mittels des Förderbandes 3 über ein Steuersignal des Automatisierungs- und Steuerblocks 1 wieder aufgenommen. Dabei wird auch die Wasserzufuhr mit Wasser mit niedrigem pH-Wert der Wasserversorgungs-einheit 6 fortgesetzt. Wasser mit einem höheren pH-Wert wird dem Behälter 5 zum Auflösen von trockenem NaOH über einen ersten Ausgang des Zeolith-Filters 13 zugeführt. Von einem zweiten Ausgang des Filters 13 wird Wasser mit einem hohen pH-Wert über einen zweiten Verschluss 15 einem ersten Behälter für Schlammwasser 9 geliefert. Der erste Behälter für Schlammwasser 9 hat eine Pufferfunktion für relativ große NaOH-Körner, die noch nicht in der Mischung aufgelöst worden sind, und für unlösliche Fremdstoffe und Verunreinigungen. Der erste Behälter 9 für Schlammwasser mit einem hohen pH-Wert ist über einem Ausgang mit dem Eingang eines zweiten Behälters 7 für Schlammwasser verbunden. In dem zweiten Behälter 7 für das Schlammwasser sind nur geringe Ablagerungen von dispergierten (ungelösten) Körnern von NaOH und unlöslichen Fremdstoffen und Verunreinigungen enthalten. Wenn das Wasser im zweiten Behälter 7 seinen höchsten Stand erreicht, wird eine Nachricht über den Informations- und Schaltausgang an den Automatisierungs- und Steuerblock gesendet. Von einem weiteren Ausgang des zweiten Behälters 7 für das Schlammwasser wird Wasser mit hohem pH-Wert (≥ 11) über eine Wasserpumpe 8 dem Eingang des Waschwasserbehälters 6 zugeführt. Beim Erreichen eines Wasserstands im unteren Bereich des zweiten Behälters 7 für Schlammwasser werden Informationen zu diesem Ereignis an den Automatisierungs- und Steuerblock 1 übertragen, der wiederum die Wasserpumpe 8 ansteuert, um diese zu stoppen. Außerdem werden über den Automatisierungs- und Steuerblock 1 die Wasserpumpe 10 und das Förderband 3 angehalten.

Die Aufrechterhaltung des Soll-pH-Werts des Wassers im Behälter 6 mit dem Waschwasser während der Ausscheidung von Ammoniak-Stickstoff ist durch einen Vergleichstest mit dem Prototyp nachgewiesen, wie es in Tabelle 3 gezeigt ist.

**Tabelle 3**

| Lauf -Nr. | Benennung der Anlage | Volumens des Waschwassers / m³ | Konzentration von Ammoniumstickstoff im Tankwasser mit Waschwasser, mg/Liter | | | | | |
|---|---|---|---|---|---|---|---|---|
| | | | Tag 1 | Tag 2 | Tag 3 | Tag 4 | Tag 5 | Tag 6 |
| 1 | Vorgeschlagene Anlage | 60 | 307,8 | 188,6 | 94,1 | 31,1 | 0,7 | 0,5 |
| 2 | Prototyp | 60 | 367,8 | 303,7 | 253,3 | 213,4 | 181,5 | 155,9 |

Wie aus den in der Tabelle 3 dargestellten Ergebnissen von Vergleichstests der vorgeschlagenen Anlage mit dem Prototyp folgt, garantiert die vorgeschlagene Anlage die Leistung des beanspruchten technischen Ergebnisses.

### Beispiel 3

Nach dem Spülen des Zeolith-Filters zur Entfernung von Ammonium-Stickstoff aus diesem, der in einer geschlossenen Wasserversorgungsanlage (RAS) an der Stelle der vorgesehenen Herstellung von Wasserorganismen montiert ist, betrug die Konzentration von Ammonium-Stickstoff im Behälter 6 mit dem Waschwasser 320 mg/Liter. Die Temperatur des Waschwassers betrug 25°C. Die Waschwassermenge in einem Tank mit Waschwasser betrug 40 m³. Die zugeführte Luftmenge zum Spülen des Wassers betrug 1000 m³/h. Im Behälter 2 für trockenes NaOH befanden sich 80 kg trockenes NaOH.

Der pH-Wert des Wassers im Behälter 6 mit dem Waschwasser ist unter dem Grenzwert, aber das Niveau der Trockenrohdichte NaOH ist oberhalb des unteren zulässigen Niveaus in einem Schüttgutbehälter 2 für trockenes NaOH. Somit wird im Wasser ein niedriger pH-Wert gehalten. Über einen Behälter 6 mit dem Waschwasser und eine damit verbundene Wasserversorgungspumpe 10 wird über den Behälter und einen seiner Ausgänge Wasser an den Eingang des siebten Verschlusses 20 gefördert. Vom Ausgang des letzteren wird dieses Wasser zu einem Eingang des Behälters 5 für die Auflösung von trockenem NaOH gefördert. Aus dem Behälter 2 für trockenes NaOH wird über ein Förderband 3 das trockene NaOH an einen zweiten Eingang des Behälters 5 für dessen Auflösung geliefert. Über eine Umwälzpumpe 4 wird über einen dritten Ausgang und einen weiteren Eingang des Behälters 5 das Wasser mit einer niedrigen Konzentration von pH (< 11), das noch eine große Menge an ungelösten NaOH-Körnern aufweist, beständig umgewälzt. Während des kontinuierlichen Pumpens des Wassers (oder eher eines Gemisches aus Wasser mit Körnern von NaOH) werden die NaOH-Körner im Wasser schnell gelöst. Der Verwirbelungsfluss der Mischung erzeugt kontinuierlich Informationen über den aktuellen pH-Wert in der Mischung im Behälter 5, die über einen Informations- und Schaltausgang zu einem Informations- und Schalteingang des Automatisierungs- und Steuerblocks 1 übertragen werden. Wenn ein pH-Wert von 11,2 des Wassers im Behälter 5 erreicht ist, wird eine weitere Förderung von trockenem NaOH vom Automatisierungs- und Steuerblock 1 unterbrochen. Bei einem pH-Wert von 9,9 im Behälter 5 wird die Förderung von trockenem NaOH mittels des Förderbandes 3 über ein Steuersignal des Automatisierungs- und Steuerblocks 1 wieder aufgenommen. Dabei wird auch die Wasserzufuhr mit Wasser mit niedrigem pH-Wert der Wasserversorgungs-einheit 6 fortgesetzt. Wasser mit einem höheren pH-Wert wird dem Behälter 5 zum Auflösen von trockenem NaOH über einen ersten Ausgang des Zeolith-Filters 13 zugeführt. Von einem zweiten Ausgang des Filters 13 wird Wasser mit einem hohen pH-Wert über einen zweiten Verschluss 15 einem ersten Behälter für Schlammwasser 9 geliefert. Der erste Behälter für Schlammwasser 9 hat eine Pufferfunktion für relativ große NaOH-Körner, die noch nicht in der Mischung aufgelöst worden sind, und für unlösliche Fremdstoffe und Verunreinigungen. Der erste Behälter 9 für Schlammwasser mit einem hohen pH-Wert ist über einem Ausgang mit dem Eingang eines zweiten Behälters 7 für Schlammwasser verbunden. In dem zweiten Behälter 7 für das Schlammwasser sind nur geringe Ablagerungen von dispergierten (ungelösten) Körnern von NaOH und unlöslichen Fremdstoffen und Verunreinigungen enthalten. Wenn das Wasser im zweiten Behälter 7 seinen höchsten Stand erreicht, wird eine Nachricht über den Informations- und Schaltausgang an den Automatisierungs- und Steuerblock gesendet. Von einem weiteren Ausgang des zweiten Behälters 7 für das Schlammwasser wird Wasser mit hohem pH-Wert (≥ 11) über eine Wasserpumpe 8 dem Eingang des Waschwasserbehälters 6 zugeführt. Beim Erreichen eines Wasserstands im unteren Bereich des zweiten Behälters 7 für Schlammwasser werden Informationen zu diesem Ereignis an den Automatisierungs- und Steuerblock 1 übertragen, der wiederum die Wasserpumpe 8 ansteuert, um diese zu stoppen. Außerdem werden über den Automatisierungs- und Steuerblock 1 die Wasserpumpe 10 und das Förderband 3 angehalten.

Die Aufrechterhaltung des Soll-pH-Werts des Wassers im Behälter 6 mit dem Waschwasser während der Ausscheidung von Ammoniak-Stickstoff ist durch einen Vergleichstest mit dem Prototyp nachgewiesen, wie es in Tabelle 4 gezeigt ist.

**Tabelle 4**

| Lauf -Nr. | Benennung der Anlage | Volumens des Waschwassers / m³ | Konzentration von Ammoniumstickstoff im Tankwasser mit Waschwasser, mg/Liter | | | | | |
|---|---|---|---|---|---|---|---|---|
| | | | Tag 1 | Tag 2 | Tag 3 | Tag 4 | Tag 5 | Tag 6 |
| 1 | Vorgeschlagene Anlage | 40 | 204,5 | 113,3 | 20,5 | 0,8 | 0,6 | 0,4 |
| 2 | Prototyp | 40 | 256,9 | 208,6 | 171,2 | 142,1 | 119,3 | 101,2 |

Wie aus den in der Tabelle 4 dargestellten Ergebnissen von Vergleichstests der vorgeschlagenen Anlage mit dem Prototyp folgt, garantiert die vorgeschlagene Anlage die Leistung des beanspruchten technischen Ergebnisses.

Für die Realisierung der beanspruchten Vorrichtung können aus dem Stand der Technik bekannte Materialien, Baugruppen und Mechanismen verwendet werden, die begründen, dass die Erfindung das Kriterium "gewerbliche Anwendbarkeit" erfüllt.

### Bezugszeichenliste

- 1: Automatisierung und Steuerung auf Blockebene
- 2: Behälter für trockenes NaOH
- 3: Förderband
- 4: Umwälzpumpe
- 5: Behälter für die Auflösung von trockenem NaOH
- 6: Waschwasserbehälter
- 7: Zweiter Behälter für Schlamm
- 8: Wasserpumpe für Wasser mit hohem pH-Wert
- 9: Erster Behälter für Schlamm
- 10: Wasserversorgungspumpe für Wasser mit niedriger pH-Konzentration
- 11: Sedimententfernungseinheit
- 12: Pumpe zum Bewegen von Sedimentfraktionen
- 13: Filter
- 14: Erster Verschluss
- 15: Zweiter Verschluss
- 16: Dritter Verschluss
- 17: Vierter Verschluss
- 18: Fünfter Verschluss
- 19: Sechster Verschluss
- 20: Siebter Verschluss

## Patentansprüche

1. Stabilisierungsanlage für den pH-Wert des Wassers im Block der Entfernung von Ammonium-Stickstoff aus dem Waschwasser der Zeolith-Filter gebildet durch Block der Automatisierung und Steuerung (Abb. 1) mit
- einem IBM-PC-kompatiblem Computer mit installiertem Programm für den PC "Das Programm der Parametersteuerung von Wasser im WRA" mit vier Informations- und Kommunikationsausgängen, und vier Informations- und Kommunikationseingängen,
- einem Behälter für trockene NaOH (2)
- einem Förderer (3)
- einer Zirkulationspumpe (4), wobei der Behälter für trockenes NaOH (2), der Förderer (3) und die Zirkulationspumpe (4) jeweils einen Informations- und Schalteingang, einen Eingang und einen Informations- und Schaltausgang aufweisen,
- einem ersten Behälter für die Auflösung des trockenen NaOH (5) mit Informations- und Schaltausgang, mit drei Eingängen, und mit drei Ausgängen,
- einem Waschwasserbehälter (6) mit Informations- und Schaltausgang, einem Ausgang und einem Eingang,
- einem zweiten Tank für Schlamm (7) mit Informations- und Schaltausgang, einem Eingang und zwei Ausgängen,
- einer Ableitungspumpe (Nummer?) für das Wasser mit der hohen Konzentration von pH (8), mit Informations- und Schalteingang, einem Ausgang und einem Eingang,
- einem ersten Tank für Schlamm (9) mit Informations- und Schaltausgang, einem Eingang und zwei Ausgängen,
- einer Wasserversorgungspumpe (10) für Wasser mit einer niedrigen Konzentration von pH (10), mit Informations- und Schalteingang, einem Eingang, zwei Ausgängen,
- einem Ableitungsblock für Sedimentationsfraktionen (11), mit zwei Eingängen und einem Ausgang zur Entsorgung,
- einer Pumpe zum Bewegen von Sedimentationsfraktionen (12), mit einem Informations- und Schalteingang, einem Eingang und einem Ausgang,
- einem Filter (13), mit einem Informations- und Schalteingang, einem Eingang und zwei Ausgängen, und
- einem ersten bis siebten Verschluss (14), mit jeweils einem Informations- und Schalteingang und jeweils einem Ausgang und einem Eingang.

2. Stabilisierungsanlage nach Anspruch 1,
**dadurch gekennzeichnet,**
- **dass** der erste Informations- und Schalteingang des Blocks der Automatisierungs- und Steuerungsautomatik (1) mit dem Informations- und Kommunikationsausgangs des Tanks zum Auflösen von trockenem NaOH (5) verbunden ist,
- **dass** der erste Tank für Schlamm (9), der zweiter Tank für Schlamm (9) und der Filter (13), der erste Informations- und Schaltausgang des Blocks der Automatisierungs- und Steuerungsautomatik (1) mit dem Informations- und Schalteingang des Tanks von trockenem NaOH (2) verbunden ist,
- **dass** der dritte Informations- und Schalteingang des Blocks der Automatisierungs- und Steuerungsautomatik (1) mit dem Informations- und Schaltausgang vom Waschwasserbehälter (6) verbunden ist,
- **dass** der erste Informations- und Schaltausgang des Blocks der Automatisierungs- und Steuerungsautomatik (1) mit dem Informations- und Schalteingang des Tanks von trockenem NaOH (2) verbunden ist,
- **dass** der zweite Informations- und Schaltausgang des Blocks der Automatisierungs- und Steuerungsautomatik (1) mit den Informations- und Schalteingänge der Wasserversorgungspumpe für das Wasser mit einer niedrigen Konzentration von pH (10) verbunden ist,
- **dass** der erste Verschluss (14), der siebte Verschluss (20), der zweite Verschluss (15), der sechste Verschluss (19) mit der Ableitungspumpe für das Wasser mit der hohen Konzentration von pH (8) verbunden sind,
- **dass** der dritte Informations- und Schaltausgang des Blocks der Automatisierungs- und Steuerungsautomatik (1) mit Informations- und Schalteingang des Förderers (3) verbunden ist,
- **dass** der vierte Informations- und Schaltausgang des Blocks der Automatisierungs- und Steuerungsautomatik (1) mit den Informations- und Schalteingänge der Zirkulationspumpe (4), der Pumpe zum Bewegen von Sedimentationsfraktionen (12), des fünften Verschlusses (18), des vierten Verschlusses (17) und des dritten Verschlusses (16) verbunden ist,
- **dass** der Ausgang des Behälters für trockene NaOH (2) mit dem Eingang des Förderers (3) der Ausgang des Förderers (3) mit dem zweiten Eingang des Behälters für die Auflösung des trockenen NaOH (5) angeschlossen, der dritte Eingang des Behälters für die Auflösung des trockenen NaOH (5) mit dem Eingang der Zirkulationspumpe (4), und der Eingang der Zirkulationspumpe (4) mit dem ersten Ausgang des Behälters für die Auflösung des trockenen NaOH (5) verbunden ist,
- **dass** der dritter Ausgang des Behälters für die Auflösung des trockenen NaOH (5) mit dem Eingang des fünften Verschlusses (18), der Ausgang des fünften Verschlusses (18) mit dem Eingang der Pumpe zum Bewegen von Sedimentationsfraktionen (12)verbunden ist,
- **dass** der Ausgang der Pumpe zum Bewegen von Sedimentationsfraktionen (12) mit einem zweiten Eingang des Ableitungsblocks für Sedimentationsfraktionen (11)verbunden ist, dessen erster Eingang ist mit dem Ausgang des sechsten Verschluss (19) verbunden ist,
- **dass** der Ausgang des Waschwasserbehälters (6) mit dem Eingang der Wasserversorgungspumpe für das Wasser mit niedriger Konzentration von pH (10) verbunden ist, deren erster Ausgang ist mit dem Eingang des siebten Verschlusses (20) und der zweite Ausgang der Wasserversorgungspumpe für das Wasser mit niedriger Konzentration von pH (10) mit dem Eingang des ersten Verschlusses (14) verbunden ist,
- **dass** der Ausgang der Wasserversorgungspumpe für das Wasser mit niedriger Konzentration von pH (10) mit dem zweiten Eingang des Filters (13) (Abb.1) und der Ausgang des siebten Verschlusses (20) mit dem ersten Eingang des Behälters für die Auflösung des trockenen NaOH (5) verbunden ist, dessen zweiter Ausgang mit dem ersten Eingang des Filters (13) und sein erster Ausgang mit dem Eingang des sechsten Verschlusses (19) verbunden ist,
- **dass** der zweite Ausgang des Behälters für die Auflösung des trockenen NaOH (5) mit dem Eingang des zweiten Verschlusses (15), der Ausgang des Verschlusses (15) ist mit dem Eingang des ersten Behälters für den Schlamm (9) und sein Ausgang ist mit dem Eingang des vierten Verschlusses (17) verbunden ist,
- **dass** der Ausgang des ersten Behälters für den Schlamm (9) mit dem Eingang der Pumpe zum Bewegen der Sedimentfraktion (12) und der erste Ausgang des Behälters für den Schlamm (7) mit den Eingang des dritten Verschlusses (16) verbunden ist,
- **dass** der Ausgang des Behälters für den Schlamm (7) mit dem Eingang der Pumpe zum Bewegen der Sedimentfraktion (12) und der zweite Ausgang des zweiten Behälters für Schlamm (7) ist mit dem Eingang der Ableitungspumpe für das Wasser mit hoher Konzentration von pH (8) verbunden ist, dessen Ausgang mit einem Eingang des Waschwasserbehälters (6) angeschlossen ist, und/oder
- **dass** der Ausgang des Ableitungsblocks für Sedimentfraktionen (11) zur Entsorgung geht.
